# FASCICULE DE BREVET EUROPEEN

(11) **EP 2 504 960 B1**
(45) Date de publication et mention de la délivrance du brevet: **19.09.2018**
(21) Numéro de dépôt: 10803599.9
(22) Date de dépôt: 19.11.2010
(51) Int. Cl.: H04L 12/701, H04L 12/729, H04L 12/801, H04L 12/803

(54) **SYSTÈME DE CONTROLE D'UN ETAT DE CHARGE D'UN LIEN PHYSIQUE PORTANT UNE PLURALITE DE LIENS VIRTUELS**
SYSTEM ZUR STEUERUNG DER LAST EINER PHYSIKALISCHER VERBINDUNG ZWISCHEN ZWEI PHYSIKALISCHEN KNOTEN MIT MEHREREN VIRTUELLEN VERBINDUNGEN
SYSTEM FOR CONTROLLING THE STATE OF LOAD OF A PHYSICAL LINK BETWEEN TWO PHYSICAL NODES INCLUDING A PLURALITY OF VIRTUAL LINKS

(30) Priorité: 27.11.2009 FR 0958436
(43) Date de publication de la demande: 03.10.2012
(73) Titulaire: Orange, 75015 Paris (FR)
(72) Inventeur: LATTMANN, Joël, 77420 Champs Sur Marne (FR); OPRESCU, Mihaela, 92130 Issy les Moulineaux (FR); MEULLE, Mickael, 75020 Paris (FR)
(86) Numéro de dépôt international: PCT/FR2010/052458
(87) Numéro de publication internationale: WO 2011/064488

(56) Documents cités:
- EP-A1- 2 109 336
- US-B1- 7 296 087
- WEI KOONG CHAI ET AL: "A Policy-Driven Network Management System for the Dynamic Configuration of Military Networks", 30 juin 2009 (2009-06-30), SCALABILITY OF NETWORKS AND SERVICES, SPRINGER BERLIN HEIDELBERG, BERLIN, HEIDELBERG, PAGE(S) 108 - 121, XP019122523, ISBN: 978-3-642-02626-3 figures 1, 2, 6, 7 alinéa [02.2] alinéa [3.1.2] - alinéa [03.2] alinéa [4.3.2] - alinéa [4.3.3]

## Description

L'invention se situe dans le domaine des réseaux de communication et concerne notamment une technique de contrôle d'un état de charge d'un lien physique entre deux noeuds de réseau physiques portant une pluralité de liens virtuels.

Il existe aujourd'hui des techniques permettant de juxtaposer des équipements virtuels sur un même équipement. A cet effet, le fonctionnement d'un équipement virtuel est simulé à l'aide de logiciels sur l'équipement réel.

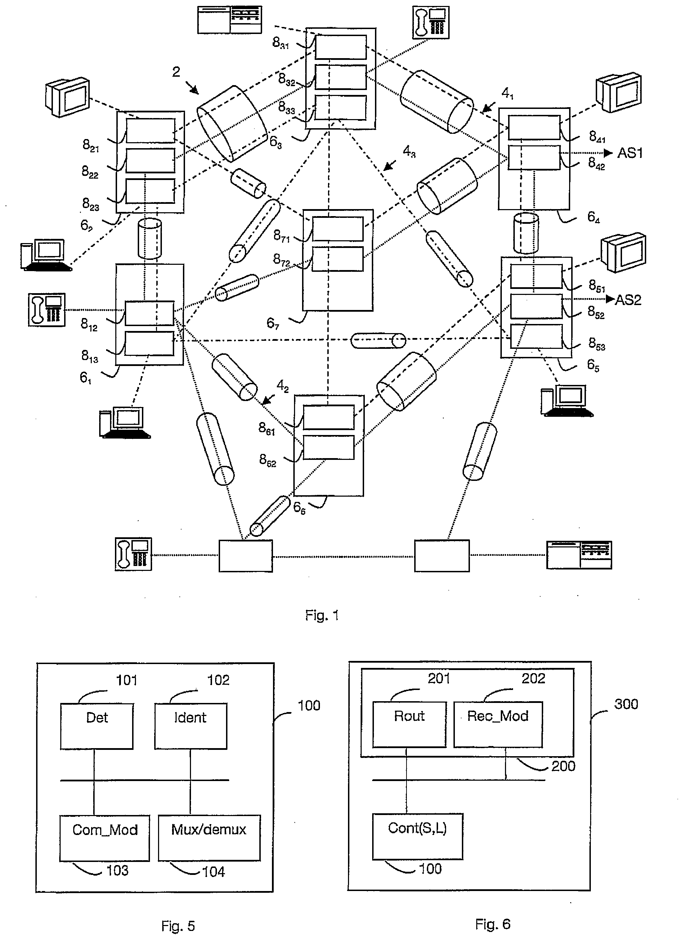

Dans la même logique, il est possible de créer des réseaux virtuels 4_{I}...4_{K} sur un même réseau physique 2, tel que représenté sur la figure 1. Un lien du réseau physique 2 peut ainsi porter une pluralité de liens virtuels, un lien virtuel reliant deux équipements virtuels appartenant à un même réseau virtuel.

Une architecture de réseaux virtuels comprend une superposition de topologies logiques différentes établies entre des équipements virtuels, ces topologies virtuelles étant supportées par l'architecture du réseau physique 2.

Dans le contexte d'accroissement des offres de service sur les réseaux de communication, il est de moins en moins envisageable de laisser tous les flux de données emprunter un réseau physique sur des plus courts chemins identiques définis par un protocole tel que IGP pour " Interior Gateway Protocol". La virtualisation permet ainsi de séparer le trafic entre les différents types de services supportés, en leur attribuant des topologies et des caractéristiques de qualité de service adaptées. Chacun des réseaux virtuels, en fonction des services qu'il doit supporter, répond à des contraintes particulières par exemple en matière de qualité de service, de temps de transit, de disponibilité. Une telle organisation permet par exemple d'affecter un service différencié à chacun des réseaux virtuels tel que :
- un service de "Voix sur IP", imposant des contraintes sur le temps de transit de bout en bout,
- un service de vidéo à la demande, imposant des contraintes de débit et de disponibilité,
- un service d'acheminement du trafic d'une entreprise, imposant une contrainte de disponibilité,
- un service d'acheminement d'un trafic inter bancaire, imposant des contraintes de sécurité,
- un service d'acheminement de trafic de type "best effort", ne devant pas perturber des trafics à garantie de qualité de service.

Dans un tel modèle, les topologies de premiers réseaux virtuels requérant une qualité de service élevée sont créées sur les chemins physiques les plus performants et celles de deuxièmes réseaux virtuels requérant une qualité de service de type "best effort" sont créées sur des chemins physiques a priori peu utilisés. La répartition des réseaux virtuels en fonction de classes de service permet ainsi d'optimiser un taux d'occupation des liens physiques.

Les données appartenant aux différents réseaux virtuels sont multiplexées ensuite sur les liens physiques. Les paquets transitent ainsi par les interfaces physiques de l'équipement physique et ces dernières sont potentiellement à l'origine de congestions.

Du fait de cette architecture de réseaux virtuels, une panne ou une congestion d'un lien physique est susceptible d'affecter la pluralité de liens virtuels empruntant ce lien physique. L'article de Wei Koong Chai et al, intitulé : "A Policy-Driven Network Management System for the Dynamic Configuration of Military Networks" et publié dans les actes de la conférence AIMS 2009, propose un procédé comprenant une allocation dynamique de topologie par classe de service couplée avec une gestion de la qualité de service entre les réseaux virtuels. La mise en oeuvre d'un tel procédé nécessite de résoudre un ensemble d'équations linéaires en minimisant un critère de coût. Ceci entraîne une charge de calcul importante, à exécuter de préférence en temps réel, afin de déterminer des métriques affectées aux liens virtuels. Ce procédé est également mis en oeuvre en cas de panne ou de congestion d'un lien physique. Un tel procédé n'est toutefois pas adapté pour être mis en oeuvre sur des réseaux physiques de taille importante, du fait de la complexité des calculs.

Un des buts de l'invention est de remédier à des insuffisances/inconvénients de l'état de la technique et/ou d'y apporter des améliorations.

Selon un premier aspect, l'invention a pour objet un procédé de contrôle d'un état de charge d'un lien physique entre deux noeuds de réseau physiques d'un réseau physique, un lien physique portant une pluralité de liens virtuels, un lien virtuel reliant deux noeuds virtuels appartenant à un réseau virtuel, des première et deuxième métriques étant associées audit lien virtuel, une métrique étant un poids dont la modification entraine un changement sur tout ou partie des plus courts chemins dudit réseau virtuel, la deuxième métrique étant supérieure à la première métrique, ledit procédé de contrôle comprenant les étapes suivantes mises en oeuvre par un des deux noeuds de réseau physiques :
- une étape de détermination d'un état de charge du lien physique comprenant une mesure du trafic acheminé par un lien physique, un état de surcharge correspondant à une mesure supérieure à un premier seuil et un état de sous-charge correspondant à une mesure inférieure à un second seuil,,
- une étape d'identification d'un lien virtuel, pour lequel une métrique courante est la première métrique lorsque le lien physique est en état de surcharge, et pour lequel la métrique courante est la seconde métrique lorsque le lien physique est en état de sous-charge,
- une étape d'envoi d'une commande à destination du noeud virtuel porté par le noeud physique et auquel le lien virtuel identifié est relié, ladite commande requérant, lorsque le lien physique est en état de surcharge, une modification de la métrique courante de la première métrique vers la deuxième métrique pour ledit lien virtuel et, lorsque le lien physique est en état de sous-charge, une modification de la métrique courante de la seconde métrique vers la première métrique pour ledit lien virtuel, ladite modification étant destinée à déclencher une mise à jour d'une table de routage dudit noeud virtuel.

Lorsque l'état de charge est un état de surcharge, le procédé de contrôle de charge vise à diminuer le trafic empruntant le lien physique en modifiant une métrique, également appelée poids, d'un lien virtuel, d'une valeur nominale à une valeur haute. Les réseaux virtuels étant supposés au moins 2-connexes, c'est-à-dire qu'il n'existe pas de lien ou de noeud dont la déconnexion sépare le réseau en parties non connexes, il est alors assuré que pour chacun des chemins d'un réseau virtuel passant par un lien physique, il existe au moins un autre chemin qui ne passe pas par ce lien. L'accroissement de métrique entraîne un changement sur tout ou partie des plus courts chemins du réseau virtuel concerné passant par le lien physique considéré. Les nouveaux chemins sont calculés par exemple par la mise en oeuvre d'un protocole de routage de type IGP dans le réseau virtuel concerné. Ceci entraîne une mise à jour d'une table de routage du noeud virtuel concerné et permet de décharger en partie le lien physique surchargé, une fois la convergence du réseau virtuel effectuée. Lorsque l'état de charge est un état de sous-charge, le procédé de charge vise à rétablir les conditions de fonctionnement nominales en repassant la métrique d'un lien virtuel qui a été modifiée à sa valeur nominale.

Il est ici souligné que le procédé de contrôle de charge est entièrement autonome, chaque noeud physique du réseau physique prenant la décision de la modification des métriques des liens des réseaux virtuels qu'il supporte. Il évite de déterminer, dès qu'un lien physique se trouve en situation d'engorgement, des modifications de métriques à apporter en prenant en compte le contexte global des réseaux physique et virtuels au moment de la détection d'un engorgement de lien. Il est par ailleurs possible de le mettre en oeuvre quel que soit le nombre de noeuds physiques et virtuels, contrairement à l'art antérieur précédemment cité.

L'attribution des métriques à chacun des liens d'un réseau virtuel est ainsi considérée comme optimale. Le but du procédé n'est donc pas d'équilibrer de façon pérenne les charges sur le réseau physique, mais de pallier une augmentation anormale et temporaire du débit local par rapport à un débit nominal prévu, puis de revenir à la situation initiale une fois l'engorgement terminé.

La mise en oeuvre du procédé de contrôle consiste à augmenter une par une, les métriques des liens virtuels supportés par le lien physique en voie de saturation, jusqu'à ce que ce dernier repasse dans un état nominal, voire de sous-charge. Il est ici souligné que ce type de solution a été envisagé pour un réseau de communication classique, c'est-à-dire non virtuel, et que l'état de la technique indique que les inconvénients sont trop importants par rapport aux avantages. Un premier inconvénient consiste en une création de boucles de routage temporaires qui sont susceptibles d'apparaître pendant la phase de convergence du réseau : il est alors possible d'avoir localement un pic de trafic dans la boucle, celui-ci provoquant une perte de paquets sans distinction d'appartenance à un service particulier. Un deuxième inconvénient consiste en une propagation de la saturation à d'autres liens suite aux changements de plus courts chemins, qui peut alors provoquer un effet de cascade ou de rebond. L'article de B. Fortz et al intitulé "Traffic Engineering with traditional IP Routing Protocols" publié dans le magazine IEEE Communications, octobre 2002, écarte ainsi cette possibilité de modification locale d'une métrique d'un lien congestionné.

Afin d'éviter un phénomène d'instabilité sur le réseau physique, la modification de métrique est mise en oeuvre sur un seul réseau virtuel à la fois. De ce fait, bien qu'il n'y ait qu'une seule modification de métrique par lien virtuel, la réponse au problème de surcharge est progressive avec comme avantages :
- de limiter le phénomène de cascade et de rebond au seul réseau virtuel impacté puisque l'accroissement de métrique est limité à un seul réseau virtuel à la fois,
- de provoquer une transition progressive des flux de données vers d'autres chemins au fil des modifications sur les réseaux virtuels successifs.

Par ailleurs, la diversité des topologies des différents réseaux virtuels supportés permet de répartir au mieux la charge sur les liens physiques. De ce fait, les plus courts chemins recalculés sur des topologies différentes sont mieux répartis sur les liens physiques.

Selon une autre caractéristique particulière, le procédé de contrôle comprend en outre, pour un paquet à acheminer sur le lien physique en provenance d'un noeud virtuel, une étape de mise en file dudit paquet en fonction d'une priorité associée au réseau virtuel, les paquets des files étant émis en fonction desdites priorités.

Il est ici souligné que le procédé de contrôle de charge reste autonome, chaque noeud physique du réseau physique mettant en oeuvre une politique de suppression de paquets, en fonction de priorités respectivement associées aux réseaux virtuels. On privilégie dans ce cas l'acheminement des paquets appartenant à des réseaux virtuels prioritaires.

Selon une autre caractéristique particulière du procédé de contrôle, les étapes de mise en file et d'émission en fonction de priorité sont mises en oeuvre lorsque l'état de charge détecté est un état de surcharge.

En cas de surcharge d'un lien physique supportant des réseaux virtuels à priorité élevée, les liens empruntés par des chemins de contournement ne risquent pas d'être saturés même s'ils sont occupés par du trafic de type "best effort", d'une part parce que les métriques de ces réseaux virtuels ne sont pas affectées et d'autre part parce que la saturation éventuelle est gérée par le mécanisme de mise en file, avec le cas échéant, rejet des paquets de réseaux virtuels non prioritaires.

Selon une autre caractéristique particulière du procédé de contrôle, l'étape de détection d'un état de charge comprend une mesure du trafic moyen écoulé par le lien physique.

Selon une autre caractéristique particulière du procédé de contrôle, les liens virtuels portés par le lien physique étant classés dans une liste selon un ordre de priorité, on identifie le lien virtuel à l'aide d'un index dans la liste.

La modification des valeurs de métriques des liens virtuels supportés par un lien physique en cours d'engorgement se fait ainsi par réseaux virtuels successifs en suivant un ordre de priorité du lien virtuel croissant.

Ceci induit une phase de convergence sur des réseaux virtuels de plus basse priorité, acheminant par exemple le trafic en mode "best effort", sans pénaliser les réseaux de plus haute priorité, par exemple à qualité de service garantie.

Selon un deuxième aspect, l'invention concerne également une entité de contrôle d'un état de charge d'un lien physique entre deux noeuds de réseau physiques d'un réseau selon la revendication 6.

Selon un troisième aspect, l'invention concerne également un noeud physique selon la revendication 7.

Selon un quatrième aspect, l'invention concerne également un système de communication selon la revendication 8.

Selon un cinquième aspect, l'invention concerne également un programme d'ordinateur selon la revendication 9.

L'invention sera mieux comprise à l'aide de la description suivante d'un mode de réalisation particulier du procédé de l'invention, en référence aux dessins annexés sur lesquels :
- la figure 1 illustre une architecture d'un réseau physique supportant plusieurs réseaux virtuels ;
- la figure 2 représente une partie des étapes du procédé de contrôle selon un mode particulier de réalisation de l'invention ;
- la figure 3 représente une autre partie des étapes du procédé de contrôle selon un mode particulier de réalisation de l'invention ;
- les figures 4a et 4b illustrent une mise en oeuvre d'étapes du procédé de contrôle selon un mode particulier de réalisation de l'invention ;
- la figure 5 représente une entité de contrôle d'un état de charge selon un mode particulier de réalisation de l'invention ;
- la figure 6 représente un noeud physique selon un mode particulier de réalisation de l'invention.

La figure 1 illustre une architecture d'un réseau physique 2 dans une configuration comprenant K réseaux virtuels sur N noeuds physiques de réseaux. Plus précisément, cette configuration est représentée dans le cas particulier de trois réseaux virtuels portés par le réseau physique 2 comprenant sept noeuds réels. Il s'agit bien entendu d'un exemple illustratif et non limitatif. Plusieurs noeuds ou routeurs virtuels sont mis en oeuvre sur un même noeud physique et sont interconnectés au moyen de l'architecture de réseau physique. L'établissement d'un réseau virtuel sur une infrastructure de réseau physique comprend une superposition de topologies logiques différentes entre les routeurs virtuels. Chacun des réseaux virtuels se comporte, comme un réseau à part entière sur lequel il est possible de mettre en oeuvre des protocoles de routage et des services. Les réseaux virtuels peuvent être connectés avec d'autres réseaux ou systèmes autonomes AS (ou "Autonomous System" en anglais). La résilience d'un réseau nécessite que la topologie du réseau soit au moins 2-connexe, c'est-à-dire qu'il n'existe pas de lien ou de noeud dont la déconnexion sépare le réseau en parties non connexes. Ainsi, il existe au moins deux chemins différents entre toute paire de noeuds du réseau. Une condition nécessaire plus générale à la résilience d'un réseau se traduit par le fait qu'une panne simple n'entraîne pas la dégradation du service supporté par le réseau. Cette condition n'est pas toujours réalisable dans les réseaux réels en raison de la possibilité de pics de charge difficiles à prendre en compte dans les calculs de dimensionnement. La 2-connexité et plus généralement la n-connexité, par contre, relève de l'application de règles d'ingénierie lors de la mise en oeuvre du réseau.

On suppose dans la suite que les réseaux virtuels créés sur le réseau physique sont au moins 2-connexes relativement aux pannes de noeuds virtuels ou de noeuds physiques.

Les sept noeuds réels, ou noeuds de réseau physiques, notés 6₁ à 6₇, sont reliés des liens du réseau physique 2 et supportent les trois réseaux virtuels 4₁ à 4₃. Dans les noeuds réels, sont configurés des noeuds virtuels notés 8ᵢⱼ. Plus précisément, sur le noeud physique 6₂, sont configurés trois noeuds virtuels 8₂₁, 8₂₂, 8₂₃. Les noeuds virtuels 8ᵢ₁, plus précisément les noeuds virtuels 8₂₁, 8₃₁, 8₄₁, 8₅₁, 8₆₁, 8₇₁, appartiennent au réseau virtuel 4₁ et sont reliés entre eux par des liens virtuels, représentés par un trait composé de tirets. Les noeuds virtuels 8ᵢ₂, plus précisément les noeuds virtuels 8₁₂, 8₂₂, 8₃₂, 8₄₂, 8₅₂, 8₆₂, 8₇₂, appartiennent au réseau virtuel 4₂ et sont reliés entre eux par des liens virtuels, représentés par un trait pointillé. Les noeuds virtuels 8ᵢ₃, plus précisément les noeuds virtuels 8₁₃, 8₂₃, 8₃₃, 8₅₃, appartiennent au réseau virtuel 4₃ et sont reliés entre eux par des liens virtuels, représentés par un trait alternant des tirets et des pointillés. Les noeuds, ou routeurs, virtuels 8ᵢⱼ mettent en oeuvre des fonctions d'acheminement de paquets dans leurs réseaux virtuels respectifs. A cet effet, les noeuds virtuels gèrent une table de routage pour leur réseau virtuel.

Selon l'invention, on associe à un réseau virtuel une priorité de réseau. Cette priorité de réseau dépend du type de trafic supporté. De ce fait, plusieurs réseaux virtuels peuvent avoir une priorité de réseau identique. De façon connue, les réseaux acheminent aussi bien du trafic pour lequel la perte de paquets peut être dommageable nécessitant une qualité de service garantie que du trafic dit élastique, régulé par la source de celui-ci et autorisant, dans une certaine mesure, la perte de paquets. Le mode d'attribution de la priorité ne fait pas partie du procédé mais peut, par exemple, dépendre du fait que le trafic véhiculé est plus ou moins sensible à la perte de paquets. D'autres critères peuvent intervenir comme les contrats de garantie de service passés entre l'opérateur du réseau virtuel et des clients. Ceci permet par exemple d'associer une priorité haute à un premier réseau virtuel supportant un service de type "Voix sur IP", une priorité moyenne à un deuxième réseau virtuel supportant un service de type "vidéo à la demande" et une priorité basse à un troisième réseau virtuel supportant un service d'acheminement de trafic de type "Best effort".

Toujours selon l'invention, on associe à un lien virtuel d'un réseau virtuel deux métriques distinctes. Une première métrique W_{L}, ou métrique nominale, correspond à une métrique associée au lien lorsque le lien physique sous-jacent est dans un premier état de charge, dit état nominal. Une deuxième métrique W_{H}, ou métrique haute, correspond à une métrique associée au lien lorsque le lien physique sous-jacent est dans un deuxième état de charge, dit état de surcharge.

Les algorithmes de calcul et d'optimisation des métriques dans un réseau en fonction des matrices de trafic, prévisionnelles ou réelles, font partie de l'état de la technique et sont par exemple décrits dans l'article de M. Ericsson et al, intitulé "A genetic algorithm for the weight setting problem in OSPF routing", publié en octobre 2001.

Dans un mode particulier de réalisation, les liens virtuels portés par un lien physique sous-jacent sont ordonnés selon un ordre prédéterminé, appelés priorité du lien virtuel. Par exemple, les liens virtuels sont classés en ordre inverse de leur contribution au trafic acheminé par le lien physique sous-jacent.

Il est ici souligné que les priorités du réseau et des liens virtuels ne sont pas les mêmes et ont des fonctions différentes. Pour un ensemble de réseaux virtuels de priorité du réseau identique donnée, on fixe une priorité relative aux liens de ces réseaux virtuels les uns par rapport aux autres. La priorité d'un lien virtuel est ainsi définie par une priorité de réseau et un rang dans cette priorité de réseau.

On note par la suite LV[] = [L₁,L₂,...,L_{N}] un tableau de descripteurs des N liens virtuels supportés par le lien physique, rangés par ordre de priorité croissante.

Un descripteur de lien virtuel L = LV[p] est constitué de trois champs :
- L.k, pour k variant de un à K : rang du réseau virtuel dans l'ensemble V des réseaux virtuels,
- L.M1 : métrique nominale du lien virtuel ou W_{L},
- L.M2 : métrique haute du lien virtuel ou W_{H}.

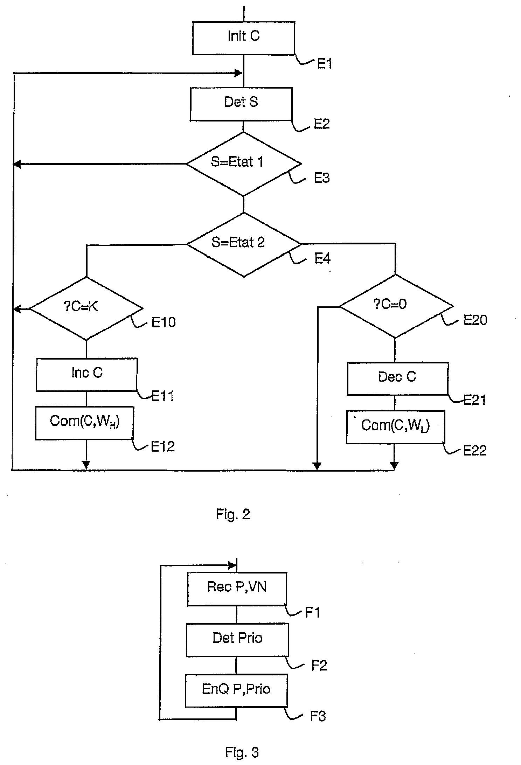

Le procédé de contrôle, tel que mis en oeuvre par un noeud physique 6ᵢ, va maintenant être décrit en relation avec la figure 2.

Dans une étape initiale E1, un compteur C est initialisé à la valeur nulle.

Dans une étape E2 de détermination d'un état de charge, le noeud physique 6ᵢ effectue une mesure D(t) du trafic acheminé par un lien physique L.

Le lien physique L est dans l'état nominal lorsque la mesure du trafic empruntant ce lien est comprise entre des premier seuil_max et deuxième seuil_min seuils. Le lien physique L est dans l'état de surcharge lorsque la mesure du trafic empruntant ce lien est supérieure au premier seuil. Le lien physique est dans un état de sous-charge lorsque la mesure du trafic empruntant ce lien est inférieure au deuxième seuil.

La mesure de trafic peut être effectuée selon différentes méthodes connues, telles qu'une mesure du débit moyen D(t) sur un intervalle de temps glissant de durée T très supérieure à une valeur T_{C}, correspondant à un temps de convergence du réseau. Par temps de convergence du réseau, on entend un temps nécessaire à des routeurs pour synchroniser leurs tables de routage respectives après un changement dans la topologie du réseau.

Dans une étape E3, le noeud physique 6ᵢ vérifie si l'état de charge du lien est l'état nominal. Si tel est le cas, le procédé repasse à l'étape E2 de détermination de l'état du lien.

Si ce n'est pas le cas, c'est-à-dire si l'état de charge du lien physique L n'est pas l'état nominal, le noeud physique 6ᵢ vérifie dans une étape E4 si l'état de charge est l'état de surcharge.

Si l'état de charge du lien physique L est l'état de surcharge, le noeud physique 6ᵢ vérifie dans une étape E10 si le compteur C a atteint la valeur K. Dans ce cas, les métriques respectives des liens virtuels portées par le lien physique L sous-jacent ont déjà été modifiées vers leurs valeurs hautes respectives. Le procédé de contrôle ne peut alors effectuer aucune action et repasse à l'étape E2 de détermination de l'état de charge.

Si le compteur C n'a pas atteint la valeur K, il existe alors au moins un lien virtuel pour lequel la métrique associée n'a pas été modifiée vers sa valeur haute. Dans une étape E11, le noeud physique 6ᵢ incrémente d'un la valeur du compteur C. Le compteur C correspond au rang du réseau virtuel à traiter. Dans une étape E12, le noeud physique 6ᵢ commande au noeud virtuel 8_{iC} de modifier la métrique associée au lien virtuel vers la valeur haute L.M2 ou W_{H}.

Cette modification de métrique sur le lien virtuel déclenche dans le réseau virtuel une phase de convergence, pendant laquelle les différents noeuds virtuels vont mettre à jour leurs tables de routage respectives en fonction des plus courts chemins déterminés.

Il est ici souligné que la métrique d'un seul lien virtuel est modifiée afin de ne pas déclencher simultanément des phases de convergence sur les différents réseaux virtuels. La phase de convergence déclenchée permet ainsi de redistribuer le cas échéant une partie du trafic du réseau virtuel sur d'autres liens physiques.

Les boucles de routage, si elles apparaissent, sont ainsi limitées à un seul réseau virtuel à la fois et à un sous ensemble du trafic global de priorité basse.

Les effets de rebond et de cascade sont susceptibles d'apparaître mais de la même manière, ils ne perturbent que les réseaux de moindre priorité et sont par ailleurs atténués du fait de l'unicité du pas de modification des métriques. Cette unicité limite les échanges successifs de plus courts chemins passant par des liens qui se surchargent tour à tour.

Par conséquent, la mise en oeuvre du procédé ne provoque pas de perturbation globale des transferts de paquets sur le réseau physique et limite les perturbations aux réseaux de priorité basse supportant essentiellement le trafic de type « best effort »

Il est également avantageux de mettre en oeuvre de nouveau l'étape E2 de détermination d'un état de charge à l'issue d'une période supérieure au temps de convergence du réseau dès qu'une modification de métrique est effectuée, afin de laisser un temps suffisant au réseau virtuel pour aboutir à un état stable. Le procédé de contrôle repasse ensuite à l'étape E2 de détermination d'un état de charge.

Si l'état de charge du lien physique L est l'état de sous-charge, le noeud physique 6ᵢ vérifie dans une étape E20 si le compteur C a atteint la valeur nulle. Dans ce cas, les métriques respectives des liens virtuels portées par le lien physique L sous-jacent sont à leurs valeurs nominales respectives. Le procédé de contrôle ne peut alors effectuer aucune action et repasse à l'étape E2 de détermination de l'état de charge.

Si le compteur C n'a pas atteint la valeur nulle, il existe alors au moins un lien virtuel pour lequel la métrique associée a été modifiée vers sa valeur haute. Dans une étape E21, le noeud physique 6ᵢ décrémente d'un la valeur du compteur C. Dans une étape E22, le noeud physique 6ᵢ commande au noeud virtuel 8_{iC} de modifier la métrique associée au lien virtuel vers la valeur basse L.M1 ou W_{L}. Cette modification de métrique a les mêmes conséquences que celles décrites à l'étape E12. Le procédé de contrôle repasse ensuite à l'étape E2 de détermination d'un état de charge, éventuellement après une période supérieure au temps de convergence du réseau.

Les étapes E1 à E22 du procédé de contrôle déclenchent des actions mises en oeuvre dans un plan de contrôle du réseau virtuel.

En parallèle, le procédé de contrôle effectue des actions dans un plan de transfert du réseau physique. Plus précisément, pour un paquet à acheminer dans le réseau physique, le noeud physique 6ᵢ va mettre en oeuvre des étapes F1 à F3 du procédé de contrôle. Ces étapes F1 à F3 sont décrites en référence à la figure 3.

Le but de ces étapes vise, par exemple, à mettre en oeuvre une gestion des files d'attente du noeud physique 6ᵢ basée sur une classification des réseaux virtuels, analogue à une classification de type Diffserv. Pour rappel, Diffserv nécessite une classification et un marquage d'appartenance à une classe de service donnée des paquets IP en entrée de réseau. Des traitements différenciés en fonction des différentes classes de trafic sont ensuite appliqués. Selon l'invention, la priorité du réseau virtuel définie précédemment est utilisée pour déterminer la classe de service à laquelle il appartient.

Lors de l'étape F1, le noeud physique 6ⱼ reçoit un paquet P à acheminer sur le lien physique L en provenance du réseau virtuel 4ⱼ. Lors de l'étape F2, le noeud physique 6ᵢ obtient la priorité du réseau virtuel 4ⱼ. Lors de l'étape F3, le noeud physique 6ᵢ met le paquet P en file en fonction de la priorité du réseau virtuel obtenue. Les paquets présents dans les files d'attente sont émis selon des techniques connues de l'art antérieur telles que des méthodes de type RED, pour "Random Early Detection", de type "Round Robin", de type "Weighted Fair Queuing" ou autres. La mise en file des paquets s'avère plus simple à réaliser que dans les réseaux classiques, notamment gérés par la méthode DiffServ car les paquets sont uniquement différenciés en fonction du critère d'appartenance à un réseau virtuel donné. Le noeud physique 6ᵢ détermine déjà cette appartenance lors des opérations de multiplexage/démultiplexage des données à destination/en provenance des réseaux virtuels.

Dans une première variante, lors de l'étape E12, c'est-à-dire lorsque l'état de charge du lien physique L correspond à un état de surcharge, le noeud physique 6ᵢ déclenche la mise en oeuvre des étapes F1 à F3 du procédé de contrôle dans le plan de transfert. De manière complémentaire, lors de l'étape E22, c'est-à-dire lorsque l'état de charge du lien physique est un état de sous-charge, le noeud physique 6ᵢ arrête de mettre en oeuvre les étapes F1 à F3 du procédé de contrôle dans le plan de transfert. Par conséquent, lorsque l'état de charge correspond à un état nominal, les étapes F1 à F3 du procédé de contrôle ne sont mises en oeuvre. Dans ce cas, tant que l'état de charge du lien physique L est un état de charge nominal, c'est-à-dire tant que la bande passante du lien physique L est disponible, les paquets P sont acheminés sans discrimination, c'est-à-dire en mode "best effort". Dès que l'état de charge du lien physique L passe à un état de surcharge, la discrimination pour l'acheminement des paquets en fonction de leur appartenance à un réseau virtuel est mise en oeuvre.

Dans une deuxième variante, le noeud physique 6ᵢ ne met pas en oeuvre les étapes F1 à F3 du procédé de contrôle. Dans ce cas, le procédé de contrôle permet d'obtenir les avantages mentionnés préalablement en relation avec les étapes E1 à E22.

Les valeurs des métriques hautes et nominales des métriques associées aux liens virtuels sont susceptibles d'évoluer dans le temps en fonction de conditions de charge de ces liens. Ces paramètres sont de préférence accessibles par l'intermédiaire d'une interface d'administration du noeud physique 6ᵢ.

L'ordre de priorité des liens virtuels propre à chaque lien physique peut également évoluer en fonction de profils statistiques établissant la répartition de la charge des réseaux virtuels dans le temps. Une troisième variante consiste à calculer le niveau de priorité à partir d'une mesure locale en temps réel de la charge des liens virtuels.

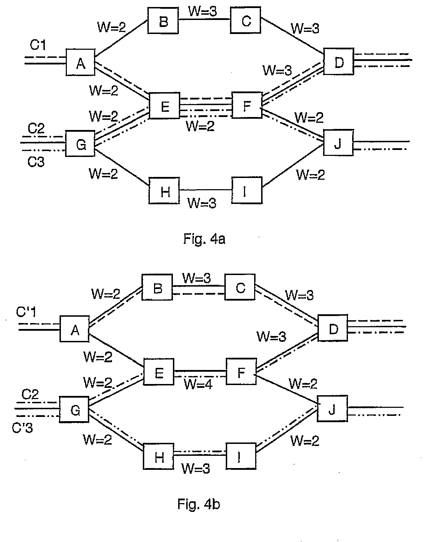

Un exemple illustratif de la mise en oeuvre d'une partie des étapes du procédé de contrôle par un noeud physique va être détaillé à l'aide des figures 4a et 4b. Un réseau virtuel VN est supporté par des liens physiques, représentés en traits pleins sur les figures 4a et 4b. Afin de ne pas complexifier ces figures 4a et 4b, un seul réseau virtuel est décrit et représenté. Il est bien entendu que d'autres réseaux virtuels peuvent emprunter les liens physiques mentionnés précédemment. Le procédé de contrôle étant mis en oeuvre pour un unique réseau virtuel par itération, il n'est pas utile de décrire ces autres réseaux virtuels. Ces liens physiques relient les noeuds physiques A-J. Plus précisément, le noeud physique A est relié aux noeuds physiques B et E. Le noeud physique B est relié aux noeuds physiques A et C. Le noeud physique C est relié aux noeuds physiques B et D. Le noeud physique E est relié aux noeuds physiques A, G et F. Le noeud physique F est relié aux noeuds physiques E, D et J. Le noeud physique D est relié aux noeuds physiques C et F. Le noeud physique G est relié aux noeuds physiques E et H. Le noeud physique H est relié aux noeuds physiques G et I. Le noeud physique I est relié aux noeuds physiques H et J. Le noeud physique J est relié aux noeuds physiques F et I. Les liens virtuels du réseau virtuel VN, AB, BC, CD, AE, EF, FD, GE, FJ, GH, HI, IJ ont respectivement comme métriques associées les valeurs suivantes 2, 3, 3, 2, 2, 3, 2, 2, 2, 3, 2, représentées sur la figure 4a sous la forme "W=".

Dans un état nominal, tel que représenté à la figure 4a, trois chemins C1, C2 et C3 empruntent le lien physique EF. Le premier chemin C1, représenté en traits tiret cadratin, est porté par les liens physiques AEFD et a comme métrique associée une valeur de sept. Le deuxième chemin C2, représenté en traits tiret cadratin-point, est porté par les liens physiques GEFD et a comme métrique associée une valeur de sept. Le troisième chemin C3, représenté en traits tiret cadratin-point-point, est porté par les liens physiques GEFJ et a comme métrique associée une valeur de six.

A l'étape E4 du procédé de contrôle, le noeud physique E détecte que le lien physique EF a atteint un premier seuil et risque de saturer. A l'étape E12 du procédé de contrôle, le noeud physique E commande une modification de la métrique associée au lien virtuel porté par le lien physique sous-jacent EF de la valeur nominale de deux à une valeur haute de quatre. La figure 4b illustre l'état du réseau de la figure 4a suite à cette modification de métrique. Le meilleur chemin entre les noeuds physiques A et D traverse alors les noeuds physiques B et C. Ce nouveau premier chemin est noté C'1 et a comme métrique associée une valeur de huit. Le meilleur chemin entre les noeuds physiques G et J traverse alors les noeuds physiques H et I. Ce nouveau troisième chemin est noté C'3 et a comme métrique associée une valeur de sept. Le deuxième chemin C2 entre les noeuds physiques G et D demeure l'un des plus courts chemins passant par les noeuds physiques E et F et a comme métrique associée la valeur de neuf.

On constate à l'aide de cet exemple illustratif que la modification de la métrique sur le lien physique EF apportée à l'aide du procédé de contrôle selon l'invention a permis de provoquer une nouvelle détermination des plus courts chemins dans le réseau virtuel VN et ainsi de décharger le lien physique EF. Si le lien physique EF reste toujours au dessus de ce premier seuil, le noeud physique E va alors mettre de nouveau en oeuvre les étapes du procédé de contrôle pour l'un des autres réseaux virtuels empruntant le lien physique EF.

Une entité de contrôle d'un état de charge va maintenant être décrite en relation avec la figure 5.

Une telle entité 100 de contrôle d'un état de charge comprend :
- un module 101 de détection d'un état de charge du lien physique ;
- un module 102 d'identification d'un lien virtuel, pour lequel une métrique courante est la première métrique ;
- un module 103 d'envoi d'une commande à destination du noeud virtuel porté par le noeud physique et auquel le lien virtuel identifié est relié, ladite commande requérant une modification de la métrique courante de la première métrique vers la deuxième métrique pour ledit lien virtuel ;
- un module 104 de multiplexage et démultiplexage des paquets en provenance ou à destination de noeuds virtuels et à acheminer sur un lien physique.

Le module 104 de multiplexage/démultiplexage peut également être agencé pour mettre en file les paquets en fonction d'une priorité associée au réseau virtuel auquel ils appartiennent et multiplexer les paquets mémorisés dans les files.

L'entité 100 de contrôle d'un état de charge telle que décrite précédemment est destinée à être intégrée dans un noeud 300 physique, tel que représenté à la figure 6. Ce noeud 300 physique comprend également un ou plusieurs noeuds 200 virtuels. Le noeud virtuel 200 comprend un module 201 d'acheminement, agencé pour mettre en oeuvre des fonctions de noeud virtuel et un module 202 de réception, agencés pour recevoir une commande de modification d'une métrique courante de la première métrique vers la deuxième métrique pour un lien virtuel. Le module 202 transmet alors au module 201 la nouvelle métrique à appliquer sur le lien virtuel concerné. Les modules 201, 202 du noeud virtuel sont de préférence des modules logiciels comprenant des instructions logicielles pour acheminer des paquets dans un réseau virtuel et pour recevoir une commande de modification de la métrique courante.

Les modules 101, 102, 103 d'une entité de contrôle d'un état de charge 100 sont agencés pour mettre en oeuvre les étapes du procédé de contrôle d'un état de charge précédemment décrit exécutées par l'entité de contrôle. Il s'agit de préférence de modules logiciels comprenant des instructions logicielles pour faire exécuter celles des étapes du procédé de contrôle d'un état de charge précédemment décrit, mises en oeuvre par une entité. L'invention concerne donc aussi :
- un programme pour entité de contrôle d'un état de charge, comprenant des instructions de programme destinées à commander l'exécution des étapes du procédé de contrôle précédemment décrit qui sont exécutées par ladite entité, lorsque ledit programme est exécuté par un processeur de celle-ci ;
- un support d'enregistrement lisible par une entité de contrôle d'un état de charge sur lequel est enregistré le programme pour entité de contrôle.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de contrôle d'un état de charge d'un lien physique entre deux noeuds de réseau physiques (6₁,...,6₇) d'un réseau physique (2), le lien physique portant une pluralité de liens virtuels, un lien virtuel reliant deux noeuds virtuels (8₁₂,...,8₇₂) appartenant à un réseau virtuel (4₁,...4₃) au moins 2-connexe, des première et deuxième métriques étant associées audit lien virtuel, une métrique étant un poids dont la modification entraine un changement sur tout ou partie des plus courts chemins dudit réseau virtuel, la deuxième métrique étant supérieure à la première métrique, ledit procédé de contrôle comprenant les étapes suivantes mises en oeuvre par un des deux noeuds de réseau physiques :
- une étape (E2, E4) de détermination d'un état de charge du lien physique comprenant une mesure du trafic acheminé par un lien physique, un état de surcharge correspondant à une mesure supérieure à un premier seuil et un état de sous-charge correspondant à une mesure inférieure à un second seuil,
- une étape (E11, E21) d'identification d'un lien virtuel de la pluralité de liens virtuels pour lequel la métrique courante est la première métrique lorsque le lien physique est en état de surcharge, et pour lequel la métrique courante est la seconde métrique lorsque le lien physique est en état de sous-charge,
- une étape (E12, E22) d'envoi d'une commande à destination du noeud virtuel porté par le noeud physique et auquel le lien virtuel identifié est relié, ladite commande requérant, lorsque le lien physique est en état de surcharge, une modification de la métrique courante de la première métrique vers la deuxième métrique pour ledit lien virtuel et, lorsque le lien physique est en état de sous-charge, une modification de la métrique courante de la seconde métrique vers la première métrique pour ledit lien virtuel, ladite modification étant destinée à déclencher une mise à jour d'une table de routage dudit noeud virtuel.

2. Procédé de contrôle selon la revendication 1, comprenant en outre :
pour un paquet à acheminer sur le lien physique en provenance d'un noeud virtuel, une étape (F3) de mise en file dudit paquet en fonction d'une priorité associée au réseau virtuel, les paquets des files étant émis en fonction desdites priorités.

3. Procédé de contrôle selon la revendication 2, dans lequel les étapes de mise en file et d'émission en fonction de priorité sont mises en oeuvre lorsque l'état de charge détecté est un état de surcharge.

4. Procédé de contrôle selon la revendication 1, dans lequel l'étape de détection d'un état de charge comprend une mesure du trafic moyen écoulé par le lien physique.

5. Procédé de contrôle selon la revendication 1, dans lequel les liens virtuels portés par le lien physique étant classés dans une liste selon un ordre de priorité, on identifie le lien virtuel à l'aide d'un index dans la liste.

6. Entité (100) de contrôle d'un état de charge d'un lien physique entre deux noeuds de réseau physiques (6₁,...,6₇) d'un réseau physique (2), le lien physique portant une pluralité de liens virtuels, un lien virtuel reliant deux noeuds virtuels (8₁₂,...,8₇₂) appartenant à un réseau virtuel (4₁,...4₃) au moins 2-connexe, des première et deuxième métriques étant associées audit lien virtuel, une métrique étant un poids dont la modification entraine un changement sur tout ou partie des plus courts chemins dudit réseau virtuel, la deuxième métrique étant supérieure à la première métrique, ladite entité de contrôle comprenant :
- des moyens (101) de détermination d'un état de charge du lien physique comprenant une mesure du trafic acheminé par un lien physique, un état de surcharge correspondant à une mesure supérieure à un premier seuil et un état de sous-charge correspondant à une mesure inférieure à un second seuil,,
- des moyens (102) d'identification d'un lien virtuel de la pluralité de liens virtuels, pour lequel la métrique courante est la première métrique lorsque le lien physique est en état de surcharge, et pour lequel la métrique courante est la seconde métrique lorsque le lien physique est en état de sous-charge,
- des moyens (103) d'envoi d'une commande à destination du noeud virtuel porté par le noeud physique et auquel le lien virtuel identifié est relié, ladite commande requérant, lorsque le lien physique est en état de surcharge, une modification de la métrique courante de la première métrique vers la deuxième métrique pour ledit lien virtuel et, lorsque le lien physique est en état de sous-charge, une modification de la métrique courante de la seconde métrique vers la première métrique pour ledit lien virtuel, ladite modification étant destinée à déclencher une mise à jour d'une table de routage dudit noeud virtuel.

7. Noeud physique comprenant une entité (100) de contrôle d'un état de charge selon la revendication 6 et une autre entité (200), comprenant un module (201) d'acheminement, agencé pour mettre en oeuvre des fonctions de noeud virtuel et un module (202) de réception, agencé pour recevoir une commande de modification d'une métrique courante d'une première métrique vers une deuxième métrique pour un lien virtuel.

8. Système de communication comprenant une pluralité de noeuds physiques selon la revendication 7.

9. Programme d'ordinateur comportant des instructions pour la mise en oeuvre du procédé de contrôle d'un état de charge selon la revendication 1 par une entité de contrôle d'un état de charge, lorsque ce programme est exécuté par un processeur.

## Patentansprüche

1. Verfahren zur Steuerung eines Lastzustands einer physikalischen Verbindung zwischen zwei physikalischen Netzknoten (6₁,... 6₇) eines physikalischen Netzes (2), wobei die physikalische Verbindung eine Vielzahl von virtuellen Verbindungen trägt, wobei eine virtuelle Verbindung zwei virtuelle Knoten (8₁₂, ... 8₇₂), die einem virtuellen mindestens Bi-Connex-Netz (4₁, ... 4₃) angehören, verbindet, wobei erste und zweite Metriken der virtuellen Verbindung zugeordnet sind, wobei eine Metrik ein Gewicht ist, dessen Veränderung zu einer Änderung auf der Gesamtheit oder einem Teil der kürzesten Wege des virtuellen Netzes führt, wobei die zweite Metrik größer als die erste Metrik ist, wobei das Steuerungsverfahren die folgenden Schritte umfasst, die von einem der zwei physikalischen Netzknoten eingesetzt werden:
- einen Schritt (E2, E4) der Bestimmung eines Lastzustands der physikalischen Verbindung, umfassend ein Maß des von einer physikalischen Verbindung beförderten Verkehrs, wobei ein Überlastzustand einem Maß über einer ersten Grenze und ein Unterlastzustand einem Maß unter einer zweiten Grenze entspricht,
- einen Schritt (E11, E12) der Identifizierung einer virtuellen Verbindung der Vielzahl von virtuellen Verbindungen, für die die laufende Metrik die erste Metrik ist, wenn die physikalische Verbindung im Überlastzustand ist, und für die die laufende Metrik die zweite Metrik ist, wenn die physikalische Verbindung im Unterlastzustand ist,
- einen Schritt (E12, E22) des Sendens eines Befehls in Richtung des virtuellen Knotens, der von dem physikalischen Knoten getragen wird, und mit dem der identifizierte virtuelle Knoten verbunden ist, wobei der Befehl, wenn die physikalische Verbindung im Überlastzustand ist, eine Änderung der laufenden Metrik von der ersten Metrik zu der zweiten Metrik für die virtuelle Verbindung fordert, und wenn die physikalische Verbindung im Unterlastzustand ist, eine Änderung der laufenden Metrik von der zweiten Metrik zu der ersten Metrik für die virtuelle Verbindung fordert, wobei die Änderung dazu bestimmt ist, eine Aktualisierung einer Routing-Tabelle des virtuellen Knotens auszulösen.

2. Steuerungsverfahren nach Anspruch 1, ferner umfassend:
für ein auf der physikalischen Verbindung von einem virtuellen Knoten kommendes zu beförderndes Paket einen Schritt (F3) des Setzens des Pakets in eine Warteschlange in Abhängigkeit von einer Priorität, die dem virtuellen Netz zugeordnet ist, wobei die Pakete der Warteschlangen in Abhängigkeit von den Prioritäten gesandt werden.

3. Steuerungsverfahren nach Anspruch 2, bei dem die Schritte des Setzens in die Warteschlange und des Sendes in Abhängigkeit von der Priorität eingesetzt werden, wenn der erfasste Lastzustand ein Überlastzustand ist.

4. Steuerungsverfahren nach Anspruch 1, bei dem der Schritt der Erfassung eines Lastzustands ein Maß des durch die physikalische Verbindung gelaufenen durchschnittlichen Verkehrs umfasst.

5. Steuerungsverfahren nach Anspruch 1, bei dem, wobei die von der physikalischen Verbindung getragenen virtuellen Verbindungen in einer Liste nach einer Prioritätsreihenfolge eingeteilt werden, die virtuelle Verbindung mit Hilfe eines Index in der Liste identifiziert wird.

6. Einheit (100) zur Steuerung eines Lastzustands einer physikalischen Verbindung zwischen zwei physikalischen Netzknoten (6₁, ... 6₇) eines physikalischen Netzes (2), wobei die physikalische Verbindung eine Vielzahl von virtuellen Verbindungen trägt, wobei eine virtuelle Verbindung zwei virtuelle Knoten (8₁₂, ... 8₇₂), die einem virtuellen mindestens Bi-Connex-Netz (4₁, ... 4₃) angehören, verbindet, wobei erste und zweite Metriken der virtuellen Verbindung zugeordnet sind, wobei eine Metrik ein Gewicht ist, dessen Veränderung zu einer Änderung auf der Gesamtheit oder einem Teil der kürzesten Wege des virtuellen Netzes führt, wobei die zweite Metrik größer als die erste Metrik ist, wobei die Steuerungseinheit umfasst:
- Mittel (101) zur Bestimmung eines Lastzustands der physikalischen Verbindung, umfassend ein Maß des von einer physikalischen Verbindung beförderten Verkehrs, wobei ein Überlastzustand einem Maß über einer ersten Grenze und ein Unterlastzustand einem Maß unter einer zweiten Grenze entspricht,
- Mittel (102) zur Identifizierung einer virtuellen Verbindung der Vielzahl von virtuellen Verbindungen, für die die laufende Metrik die erste Metrik ist, wenn die physikalische Verbindung im Überlastzustand ist, und für die die laufende Metrik die zweite Metrik ist, wenn die physikalische Verbindung im Unterlastzustand ist,
- Mittel (103) zum Senden eines Befehls in Richtung des virtuellen Knotens, der von dem physikalischen Knoten getragen wird, und mit dem der identifizierte virtuelle Knoten verbunden ist, wobei der Befehl, wenn die physikalische Verbindung im Überlastzustand ist, eine Änderung der laufenden Metrik von der ersten Metrik zu der zweiten Metrik für die virtuelle Verbindung fordert, und wenn die physikalische Verbindung im Unterlastzustand ist, eine Änderung der laufenden Metrik von der zweiten Metrik zu der ersten Metrik für die virtuelle Verbindung fordert, wobei die Änderung dazu bestimmt ist, eine Aktualisierung einer Routing-Tabelle des virtuellen Knotens auszulösen.

7. Physikalischer Knoten, umfassend eine Einheit (100) zur Steuerung eines Lastzustands nach Anspruch 6 und eine weitere Einheit (200), umfassend ein Fördermodul (201), das dazu vorgesehen ist, virtuelle Kontenfunktionen einzusetzen, und ein Empfangsmodul (202), das dazu vorgesehen ist, einen Änderungsbefehl einer laufenden Metrik von einer ersten Metrik zu einer zweiten Metrik für eine virtuelle Verbindung zu empfangen.

8. Kommunikationssystem, umfassend eine Vielzahl von physikalischen Knoten nach Anspruch 7.

9. Computerprogramm, umfassend Anweisungen für den Einsatz des Verfahrens zur Steuerung eines Lastzustands nach Anspruch 1 durch eine Einheit zur Steuerung eines Lastzustands, wenn dieses Programm von einem Prozessor ausgeführt wird.

## Claims

1. Method of control of a load state of a physical link between two physical network nodes (6₁,...,6₇) of a physical network (2), the physical link carrying a plurality of virtual links, a virtual link joining two virtual nodes (8₁₂, ..., 8₇₂) belonging to a virtual network (4₁, ... 4₃) at least 2-connected, first and second metrics being associated with said virtual link, a metric being a weight whose modification brings about a change on all or part of the shortest paths of said virtual network, the second metric being greater than the first metric, said method of control comprising the following steps implemented by one of the two physical network nodes:
- a step (E2, E4) of determining a load state of the physical link comprising a measurement of the traffic forwarded by a physical link, an overload state corresponding to a measurement above a first threshold and an under-load state corresponding to a measurement below a second threshold,
- a step (E11, E21) of identifying a virtual link of the plurality of virtual links, for which the current metric is the first metric when the physical link is in an overload state and for which the current metric is the second metric when the physical link is in an under-load state,
- a step (E12, E22) of dispatching a command destined for the virtual node carried by the physical node and to which the identified virtual link is joined, said command requesting, when the physical link is in an overload state, a modification of the current metric from the first metric to the second metric for said virtual link and, when the physical link is in an under-load state, a modification of the current metric from the second metric to the first metric for said virtual link, said modification being intended to trigger an update of a routing table of said virtual node.

2. Method of control according to Claim 1, furthermore comprising:
for a packet to be forwarded on the physical link originating from a virtual node, a step (F3) of queuing said packet as a function of a priority associated with the virtual network, the packets of the queues being sent as a function of said priorities.

3. Method of control according to Claim 2, in which the steps of queuing and of sending as a function of priority are implemented when the detected load state is an overload state.

4. Method of control according to Claim 1, in which the step of detecting a load state comprises a measurement of the mean traffic transported by the physical link.

5. Method of control according to Claim 1, in which the virtual links carried by the physical link being classed in a list according to an order of priority, the virtual link is identified with the aid of an index in the list.

6. Entity (100) for controlling a load state of a physical link between two physical network nodes (6₁,...,6₇) of a physical network (2), the physical link carrying a plurality of virtual links, a virtual link joining two virtual nodes (8₁₂,...,8₇₂) belonging to a virtual network (4₁,...4₃) at least 2-connected, first and second metrics being associated with said virtual link, a metric being a weight whose modification brings about a change on all or part of the shortest paths of said virtual network, the second metric being greater than the first metric, said control entity comprising:
- means (101) for determining a load state of the physical link comprising a measurement of the traffic forwarded by a physical link, an overload state corresponding to a measurement above a first threshold and an under-load state corresponding to a measurement below a second threshold,
- means (102) for identifying a virtual link of the plurality of virtual links, for which the current metric is the first metric when the physical link is in an overload state and for which the current metric is the second metric when the physical link is in an under-load state,
- means (103) for dispatching a command destined for the virtual node carried by the physical node and to which the identified virtual link is joined, said command requesting, when the physical link is in an overload state, a modification of the current metric from the first metric to the second metric for said virtual link, and, when the physical link is in an under-load state, a modification of the current metric from the second metric to the first metric for said virtual link, said modification being intended to trigger an update of a routing table of said virtual node.

7. Physical node comprising an entity (100) for controlling a load state according to Claim 6 and another entity (200), comprising a forwarding module (201), designed to implement virtual-node functions and a reception module (202), designed to receive a command for modification of a current metric from a first metric to a second metric for a virtual link.

8. Communication system comprising a plurality of physical nodes according to Claim 7.

9. Computer program comprising instructions for the implementation of the method of control of a load state according to Claim 1 by an entity for controlling a load state, when this program is executed by a processor.
